# EUROPÄISCHE PATENTANMELDUNG

(11) **EP 4 703 675 A1**
(43) Veröffentlichungstag der Anmeldung: **04.03.2026**
(21) Anmeldenummer: 25194711.5
(22) Anmeldetag: 07.08.2025
(51) Int. Cl.: G01B 11/16, G01M 5/00

(54) **VERFAHREN UND SYSTEM ZUM ERMITTELN VON GEOMETRIEVERÄNDERUNGEN EINES OBJEKTS**

(30) Priorität: 27.08.2024 DE 102024124444
(71) Anmelder: J-consulting GmbH, 72411 Bodelshausen (DE)
(72) Erfinder: JÄGERS, Stefan, 72411 Bodelshausen (DE)
(74) Vertreter: Platzöder Patentanwaltsgesellschaft mbH

(57) **Zusammenfassung**

Bei einem Verfahren zum Ermitteln von einer Geometrieveränderung eines Objekts (1) werden erste Bilddaten einer ersten Abbildung (5) eines Messobjekts (2) erfasst, welches an dem Objekt (1) angebracht ist, wobei die erste Abbildung das Messobjekt (2) von einem definierten Aufnahmepunkt (4) aus in einer definierten Blickrichtung (z) zu einem ersten Zeitpunkt abbildet. Des Weiteren werden zweite Bilddaten zumindest einer zweiten Abbildung des Messobjekts (2) erfasst, wobei die zweite Abbildung das Messobjekt (2) von dem definierten Aufnahmepunkt (4) aus in der definierten Blickrichtung (z) zu einem späteren zweiten Zeitpunkt abbildet. Es werden die zweiten Bilddaten mit den ersten Bilddaten verglichen und in Abhängigkeit eines Ergebnisses des Vergleichs eine Geometrieveränderung des Objekts (1) ermittelt.

## Beschreibung

Die vorliegende Erfindung betrifft ein Verfahren sowie ein System zum Ermitteln von Geometrieveränderungen eines Objekts, insbesondere niederfrequenter Schwingungen oder Verformungen des Objekts.

Es sind Verfahren und Systeme bekannt, um Geometrieveränderungen von Objekten, wie beispielsweise Bauwerken zu ermitteln. Insbesondere werden solche Verfahren eingesetzt, um Schwingungen oder andere Veränderungen, wie Ermüdungen an der Struktur eines Bauwerks zu bestimmen. Beispielsweise wird im Rahmen von Structural Health Monitoring (SHM) der Zustand eines Objekts, wie eines Bauwerks überwacht, insbesondere ob Struktur und Fundament eines Bauwerks noch stabil und intakt sind.

Zu diesem Zweck kann ein Bauwerk mit verschiedenen Sensoren ausgestattet werden, welche beispielsweise in der Lage sind, Vibrationen und dergleichen des Bauwerks zu messen. Auf dem Gebiet der Geodäsie sind auch andere Vermessungsverfahren bekannt, beispielsweise optische Vermessungsverfahren. Hierzu kann zum Beispiel ein Laser auf einen Punkt auf einem Bauwerk gerichtet werden, welcher dort mittels einer Reflektorvorrichtung reflektiert wird. Abweichungen in dem reflektierten Laserstrahl können dann entsprechend ausgewertet werden, beispielsweise um Verschiebungen oder Verformungen zu messen.

Bei bekannten Verfahren, insbesondere bei Verfahren, welche Sensoren zur Vibrationsmessung an Bauwerken einsetzen, kann es jedoch schwierig sein, sehr langsame Veränderung der Geometrie des Bauwerks, wie sehr langwellige Schwingungen oder nicht periodische Verformungen zu ermitteln, da diese Sensoren in einem derart niedrigen Frequenzbereich ungenau sein können. Außerdem sind solche Verfahren, insbesondere die eingesetzte Technik teuer und aufwändig.

Optische Messverfahren erfordern häufig eine aufwändige Installation mit einem Messgerät an einem fixen Punkt entfernt von dem Bauwerk, was beispielsweise bei Offshore-Bauwerken, wie Windkraftanlagen auf See schwierig sein kann. Bei derartigen Bauwerken treten zudem mit hoher Wahrscheinlichkeit besonders langsame Veränderungen in der Geometrie des Bauwerks auf, die durch den Wellengang verursacht sein können.

Der vorliegenden Erfindung liegt die Aufgabe zugrunde, das Ermitteln von Geometrieveränderungen eines Objekts weiter zu verbessern. Insbesondere soll die Erkennung von sehr langsamen Geometrieveränderungen verbessert werden.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zum Ermitteln von einer Geometrieveränderung eines Objekts. Bei dem Verfahren werden erste Bilddaten einer ersten Abbildung eines Messobjekts erfasst, welches an dem Objekt angebracht ist, wobei die erste Abbildung das Messobjekt von einem definierten Aufnahmepunkt aus in einer definierten Blickrichtung zu einem ersten Zeitpunkt abbildet. Des Weiteren werden zweite Bilddaten zumindest einer zweiten Abbildung des Messobjekts erfasst, wobei die zweite Abbildung das Messobjekt von dem definierten Aufnahmepunkt aus in der definierten Blickrichtung zu einem späteren zweiten Zeitpunkt abbildet. Es werden die zweiten Bilddaten mit den ersten Bilddaten verglichen und in Abhängigkeit eines Ergebnisses des Vergleichs eine Geometrieveränderung des Objekts ermittelt.

Das vorgenannte Verfahren nach dem ersten Aspekt beruht folglich insbesondere auf einer Auswertung der Bilddaten von Abbildungen des Messobjekts zu unterschiedlichen Zeitpunkten. Da das Messobjekt an dem Objekt angebracht ist, kann durch einen Vergleich von Abbildungen des Messobjekts auf entsprechende Geometrieänderungen des Objekts rückgeschlossen werden. Insbesondere kann durch den Vergleich der zweiten Bilddaten mit den ersten Bilddaten eine Geometrieveränderung des Objekts festgestellt werden, wenn das Ergebnis des Vergleichs einen Unterschied zwischen den ersten Bilddaten und den zweiten Bilddaten ergibt. Mit Hilfe einfacher Bildauswertung kann so ein Verfahren zur Ermittlung von Geometrieveränderungen eines Objekts bereitgestellt werden, welches einfach und kostengünstig ist. Durch Verwendung eines Messobjekts, welches an einem zu überwachenden Objekt, wie einem Bauwerk angebracht wird, kann dieses Verfahren ohne großen Installationsaufwand durchgeführt werden. Da das Verfahren ohne Sensorik am Objekt auskommt, sondern eine Geometrieveränderung durch Vergleich von Bilddaten ermittelt, können auch sehr langsame Veränderungen, wie sehr langwellige Schwingungen zuverlässig erkannt werden. Auch kann die Erkennbarkeit von Instabilitäten, z.B. Ermüdungen in einem Objekt, beispielsweise dessen Struktur oder auch dessen Fundament verbessert werden.

Unter einer "Geometrieveränderung" sind im Sinne der Erfindung beliebige Änderungen eines Objekts hinsichtlich seiner Geometrie zu verstehen. Das können insbesondere Verformungen des Objekts sein, welche dynamisch oder im Wesentlichen statisch sein können. Auch Änderungen der Lage, Position oder Orientierung eines Objekts relativ zu seiner Umgebung können eine solche Geometrieveränderung darstellen. Diese können reversibel oder irreversibel sein. Insbesondere sind periodische Geometrieveränderungen, wie Schwingungen, als Geometrieveränderungen im Sinne der Erfindung zu verstehen. Ebenso sind nicht periodische Veränderungen in der Geometrie eines Objekts, statische oder nahezu statische Verformungen, beispielsweise beim Absenken, Verfall oder anderweitiger über eine längere Zeitdauer auftretende Beeinträchtigung eines Objekts, als Geometrieveränderung im Sinne der Erfindung zu verstehen.

Unter dem Begriff "niederfrequente Schwingungen" oder "langwellige Schwingungen" sind im Sinne der Erfindung insbesondere Schwingungen in einem Frequenzbereich von 1 Hz oder weniger zu verstehen, insbesondere auch Schwingungen mit einer noch niedrigeren Frequenz von 0,1 Hz oder weniger. Derartige niederfrequente Schwingungen können insbesondere bei Bauwerken auftreten, welche sich sehr langsam, beispielsweise aufgrund von Krafteinwirkungen durch Wind, bewegen. Insbesondere bei Offshore-Bauwerken, also Bauwerke, die auf dem Meeresboden verankert sind, können besonders langsame bzw. langwellige Schwingung aufgrund der Wellenbewegungen des Meeres oder aufgrund von Gezeiten auftreten. Auch astronomische Phänomene, wie der Einfluss von Sonne oder Mond, können geringe Geometrieveränderungen eines Objekts, insbesondere eines Offshore-Bauwerks, bewirken.

Ein "Objekt" im Sinne der Erfindung soll insbesondere ein immobiles Objekt, wie ein Gebäude, Bauwerk oder natürliches Landschaftsobjekt umfassen. Derartige immobile Objekte sind fest mit ihrer Umgebung verbunden, beispielsweise dem Erdboden bzw. auf See dem Seegrund. Immobile Objekte können auch solche Objekte umfassen, die zwar nicht fest mit ihrer Umgebung verbunden sind, aber durch ihre Beschaffenheit, beispielsweise ihr Gewicht oder Ihre Form, ohne Aufwand und Hilfsmittel nicht zu bewegen sind oder nur durch Demontage mobil werden. Eine feste Verbindung kann auch eine lösbare Verbindung umfassen. Bei dem Objekt kann es sich beispielsweise um ein hohes Bauwerk, wie ein Windrad, einen Turm, ein Mast, einen Schlot oder eine Bohrplattform handeln. Es kann sich auch um ein längliches Bauwerk, wie eine Brücke, einen Tunnel oder eine Pipeline oder handeln. Natürliche Landschaftsobjekte, deren Geometrieveränderungen von Interesse sein können, können beispielsweise Vulkane, Berge oder Felswände sein. Auch denkbar ist das Ermitteln einer Geometrieveränderung der Erdoberfläche, insbesondere Verschiebungen von Platten der Erdkruste (Plattentektonik).

Der Begriff "erfassen" von Bilddaten einer Abbildung des Messobjekts im Sinne der Erfindung umfasst insbesondere das Aufnehmen einer Abbildung, beispielsweise mit Hilfe einer Bilderfassungseinrichtung, wie eines optischen Instruments, insbesondere einer Digitalkamera, oder das Empfangen entsprechender Bilddaten einer aufgenommenen Abbildung.

Der Begriff "definierter Aufnahmepunkt" im Sinne der Erfindung bedeutet insbesondere, dass ein Standort einer Bilderfassungseinrichtung, wie einer Digitalkamera, definiert und insbesondere fest ist. Der Aufnahmepunkt kann dabei insbesondere an dem Objekt angebracht, innerhalb oder außerhalb des Objekts, oder entfernt von dem Objekt angeordnet sein. Mit anderen Worten, Abbildungen des Messobjekts zu unterschiedlichen Zeitpunkten werden immer vom gleichen Punkt, dem definierten Aufnahmepunkt, aus aufgenommen.

Der Begriff "definierte Blickrichtung" im Sinne der Erfindung bedeutet insbesondere, dass eine Blickrichtung der Bilderfassungseinrichtung definiert und fest ist. Mit anderen Worten, verschiedene Bilder des Messobjekts zu unterschiedlichen Zeitpunkten werden immer in der gleichen Richtung aufgenommen. Ein Blickwinkel wird dabei nicht verändert.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem Begriff "konfiguriert" oder "eingerichtet" eine ermittelte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorermittelte Konfigurationen oder Betriebsmodi aufweisen, so dass das Konfigurieren mittels einer Auswahl einer dieser Konfigurationen bzw. Betriebsmodi erfolgen kann.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen ist die erste Abbildung ein Referenzbild, welches einer Referenzgeometrie des Objekts zugeordnet ist, wobei durch den Vergleich der zweiten Bilddaten mit den ersten Bilddaten eine Geometrieveränderung des Objekts relativ zur Referenzgeometrie ermittelt wird. Auf diese Weise kann eine Ausgangslage oder Ruhelage des Objekts, insbesondere zu einem bestimmten Zeitpunkt, kalibriert werden. Während weiterhin ein Vergleich von Bilddaten von Abbildungen zu beliebigen verschiedenen Zeitpunkten möglich sein kann, kann so alternativ oder zusätzlich die Möglichkeit geschaffen werden, eine spätere Geometrieveränderung eines Objekts bezüglich einer Ausgangssituation festzustellen.

Bei einigen Ausführungsformen wird eine ermittelte Geometrieveränderung als kritisch eingestuft, wenn das Ergebnis des Vergleichs einen Unterschied zwischen den ersten Bilddaten und den zweiten Bilddaten ergibt, der einen vorgegebenen Schwellenwert überschreitet. Auf diese Weise wird eine differenzierte Beurteilung von Geometrieveränderungen ermöglicht. Während beispielsweise Schwingungen oder dergleichen bis zu einem gewissen Ausmaß unter normalen Umständen bei einem Objekt, wie einem Bauwerk auftreten können, kann es notwendig sein, dass andere Veränderungen der Geometrie, beispielsweise sehr starke Schwingungen oder übermäßige Verformungen als kritisch angesehen werden sollten, da dies ein Hinweis auf eine Gefahr darstellen kann. Beispielsweise kann ein Bauwerk überlastet sein oder es kann eine Instabilität vorliegen. Bei Vorliegen einer kritischen Geometrieveränderung kann vorgesehen sein, dass eine Warnung ausgegeben wird.

Bei einigen Ausführungsformen sind das erste Bild und das zweite Bild Teil einer Mehrzahl von Abbildungen, welche das Messobjekt von dem definierten Aufnahmepunkt aus in der definierten Blickrichtung zu aufeinander folgenden Zeitpunkten abbilden. Mit anderen Worten, es kann eine Bildsequenz bereitgestellt werden, welche Abbildungen des Messobjekts über eine Zeitdauer an aufeinanderfolgenden Zeitpunkten darstellt. Jede Abbildung kann insbesondere auch als Einzelbild oder Frame einer Bildsequenz angesehen werden. Die Bildsequenz kann mit einer bestimmten Bildrate aufgenommen werden, beispielsweise 10 bis 60 fps ("frames per second"), insbesondere 16, 18, 24, 30, 50 oder 60 fps, um eine gewünschte zeitliche Auflösung der Geometrieveränderung zu erreichen. Aus der Mehrzahl von Abbildungen können dann jeweils aufeinanderfolgende Abbildungen verglichen werden oder auch beliebige Abbildungen, beispielsweise auch jeweils ein Vergleich mit einer ersten Abbildung der Bildsequenz, wie oben im Zusammenhang mit der Referenzgeometrie beschrieben. Eine bestimmte Anzahl von Abbildungen kann dabei einen Bildzyklus bilden, der die Grundlage für die Auswertung liefert. So kann jeweils innerhalb eines bestimmten Zyklus ermittelt werden, ob eine Geometrieveränderung vorliegt.

Bei einigen Ausführungsformen umfasst das Ermitteln einer Geometrieveränderung ein Ermitteln einer Schwingung des Objekts, insbesondere eine Schwingung des Objekts mit einer Frequenz von 1 Hz oder weniger, insbesondere 0,1 Hz oder weniger. Wie oben bereits erläutert, kann das Verfahren derart niederfrequente bzw. langwellige Schwingungen auf einfache und genaue Weise ermitteln.

Bei einigen Ausführungsformen umfasst das Ermitteln einer Geometrieveränderung ein Ermitteln einer nicht schwingenden, d.h. nicht periodischen Verformung des Objekts. Derartige Geometrieveränderungen können von besonderem Interesse sein, um langfristige Veränderungen der Geometrie eines Objekts festzustellen, beispielsweise Ermüdungen an der Struktur oder an einem Fundament wie auch oben bereits erläutert.

Bei einigen Ausführungsformen umfasst das Ermitteln einer Geometrieveränderung ein Ermitteln einer Geometrieveränderung bezüglich zumindest eines der folgenden Freiheitsgrade: Verschiebung in x-Richtung, Verschiebung in y-Richtung, Verschiebung in z-Richtung, Rotation um x-Achse, Rotation um y-Achse und Rotation um z-Achse. Das Verfahren ist somit in der Lage, auf einfache Weise, nämlich durch die (digitale) Auswertung von Bilddaten, sämtliche Freiheitsgrade einer Geometrieveränderung, was insbesondere Änderungen der Position, Lage und/oder Orientierung umfasst, zu ermitteln. Es versteht sich, dass beliebige Kombinationen der oben genannten sechs Freiheitsgrade erkannt werden können. Die x-, y- und z-Achse bilden dabei ein orthogonales Koordinatensystem, wobei die sich x- und y-Achse im Wesentlichen senkrecht zur definierten Blickrichtung erstrecken können. Die z-Achse kann sich im Wesentlichen in der definierten Blickrichtung erstrecken. Der Vergleich der Bilddaten bzw. die Auswertung des Vergleichsergebnisses, also die Erkennung einer Geometrieveränderung, kann dazu in entsprechende Teilauswertungen unterteilt werden, welche zusammengenommen dann ein Gesamtergebnis liefern.

Bei einigen Ausführungsformen weist das Messobjekt ein Muster, insbesondere ein zweidimensionales Muster auf. Während prinzipiell jedes beliebige Bild bzw. Muster geeignet ist, um das Verfahren durchzuführen, erleichtert ein einfaches geometrisches Muster die Auswertung der Bilddaten. Insbesondere kann das Muster ein geometrisches Muster, wie ein Linienmuster sein, insbesondere ein Kreuzmuster. Verschiebungen in x- und y-Richtung, d.h. Verschiebungen seitlich zur Blickrichtung können dann einfach durch Verschiebungen der Linien des Kreuzes erkannt werden. Verschiebungen in z-Richtung, d.h. Verschiebungen entlang der Blickrichtung (oder mit anderen Worten eine Veränderung des Abstands zwischen dem Messobjekt und dem Aufnahmepunkt) bewirken eine Veränderung der Linienstärke in der Abbildung des Musters. Rotationen bzw. Torsionen bewirken eine entsprechende Verzerrung der Linien bzw. Linienstärke. Derartige Veränderungen bzw. Unterschiede in den Abbildungen des Messobjekts können durch Verwendung eines zweidimensionalen Musters auf einfache Weise effizient festgestellt werden. Das Messobjekt kann ein Träger, wie eine Platte sein, auf welcher das Muster abgebildet ist. Es ist jedoch auch möglich, das Muster direkt auf das Objekt aufzubringen, beispielsweise an eine Wand eines Bauwerks.

Bei einigen Ausführungsformen ist das Objekt ein Bauwerk oder ein natürliches Landschaftsobjekt wie oben erläutert. Vorteilhaft kann das Verfahren beispielsweise bei hohen Bauwerken, wie einem Windrad oder einem Turm angewandt werden. Die Höhe des Bauwerks kann ausgenutzt werden, wenn das Messobjekt weit entfernt von dem Aufnahmepunkt angeordnet wird. Durch den großen Abstand können mit höherer Genauigkeit auch kleine Geometrieveränderungen erkannt werden, da Geometrieveränderungen, insbesondere Verschiebungen quer zur Sichtachse (d.h. in x- und y-Richtung) mit steigendem Abstand größere Änderungen in der aufgenommenen Abbildung des Messobjekts bewirken.

Bei einigen Ausführungsformen wird eine über eine Zeitdauer ermittelte Geometrieveränderung mittels einer Transformationsfunktion in einen Frequenzraum transformiert, um daraus zumindest eine Frequenz zu ermitteln, mit welcher die ermittelte Geometrieveränderung auftritt. Dazu kann beispielsweise eine Fourier- oder Laplace-Transformation ausgeführt werden. Dies kann vorteilhaft sein, wenn insbesondere die Frequenz(en) einer Schwingung des Objekts von Interesse sind. Abweichungen oder Veränderungen der Frequenzen, insbesondere wenn diese einen vorgegebenen Schwellenwert überschreiten, können dann ein Hinweis auf eine kritische Geometrieveränderung sein.

Bei einigen Ausführungsformen wird eine ermittelte Geometrieveränderung mit einem Modell zumindest einer vordefinierten Geometrieveränderung verglichen und bei einer Übereinstimmung die ermittelte Geometrieveränderung als eine Geometrieveränderung eingestuft, welche der passenden vordefinierten Geometrieveränderung entspricht. Ein solcher Abgleich ("Matching") einer ermittelten Geometrieveränderung mit vordefinierten Geometrieveränderungen erlaubt die Feststellung der Art der Geometrieveränderung. Beispielsweise bewirken verschiedenartige Strukturveränderungen eines Objekts, wie Ermüdung in Beton, Lösen von Verbindungen, Beschädigung von Strukturelementen oder dergleichen charakteristische Geometrieveränderungen. Dazu können verschiedene Szenarien an einem realen Modell gemessen oder auch simuliert werden. Eine ermittelte Geometrieveränderung kann dann entsprechend klassifiziert werden, sodass falls erforderlich entsprechende Maßnahmen zur Beseitigung von Schäden, eine Wartung oder dergleichen durchgeführt werden können. Insbesondere kann eine solche Klassifizierung basierend auf einem Frequenzspektrum erfolge, welches wie oben erläutert durch eine Transformation in einen Frequenzraum erhalten werden kann.

Bei einigen Ausführungsformen werden des Weiteren Messdaten bezüglich eines mechanischen Einflusses auf das Objekt mittels zumindest einer Sensoreinrichtung erfasst und die Messdaten mit der ermittelten Geometrieveränderung kombiniert. Auf diese Weise kann ein breites Spektrum an Frequenzen, beispielsweise bei Schwingungen des Objekts abgedeckt werden. Beispielsweise können mit Hilfe des oben beschriebenen Verfahrens sehr langwellige Schwingungen bis 0,1 Hz oder bis zu 1 Hz bestimmt werden. Mittels einer oder mehrerer weiterer Sensoreinrichtungen können dann Schwingungen mit einer Frequenz größer als 0,1 Hz bzw. größer 1 Hz, beispielsweise bis zu 15 kHz bestimmt werden. Solche höherfrequenten Schwingungen oder Vibrationen können zum Beispiel mittels eines Vibrationssensors, wie eines Piezosensors erkannt werden.

Ein zweiter Aspekt der Erfindung betrifft ein System zur Datenverarbeitung, aufweisend zumindest einen Prozessor, der so konfiguriert ist, dass er das Verfahren nach dem ersten Aspekt der Erfindung ausführt, wobei die ersten Bilddaten und zweiten Bilddaten als Eingabedaten in dem System erfasst werden. Das System kann insbesondere ein Computer oder ein Steuergerät für ein anderes oder übergeordnetes System, wie ein Vermessungssystem sein.

Ein dritter Aspekt der Erfindung betrifft eine Messanordnung mit einem solchen System zur Datenverarbeitung. Die Messanordnung umfasst des Weiteren eine Bilderfassungseinrichtung, wie eine Digitalkamera, sowie ein Messobjekt, welches an einem Objekt, welches auf eine Geometrieveränderung überwacht werden soll, derart anbringbar ist, dass es von einem definierten Aufnahmepunkt aus in einer definierten Blickrichtung sichtbar ist. Die Bilderfassungseinrichtung ist eingerichtet, eine Mehrzahl von Abbildungen von dem Messobjekt von dem definierten Aufnahmepunkt aus in der definierten Blickrichtung aufzunehmen. Dazu ist zwischen dem Messobjekt und der Bilderfassungseinrichtung eine Sichtverbindung zu schaffen. Das Messobjekt kann derart an einem Objekt anbringbar sein, dass ein Abstand zu einer Bilderfassungseinrichtung variabel ist.

Ein vierter Aspekt der Erfindung betrifft ein Computerprogramm mit Instruktionen, die bei ihrer Ausführung auf einem System nach dem zweiten Aspekt dieses veranlassen, das Verfahren nach dem ersten Aspekt auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmodulen aufweisen.

Das System nach dem zweiten Aspekt kann entsprechend einen Programmspeicher aufweisen, in dem das Computerprogramm abgelegt ist. Alternativ kann das System auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Zeichnungen.

Dabei zeigt:
**Fig. 1a** **und b** schematisch zwei Beispiele für eine Messanordnung zur Ermittlung von Geometrieveränderungen an verschiedenen Objekten;
**Fig. 2** schematisch den Ablauf eines Verfahrens gemäß der Erfindung;
**Fig. 3a**, b, c und d schematisch Abbildungen eines Messobjekts für verschiedene Geometrieveränderungen in Form von Verschiebungen; und
**Fig. 4a**, b und c schematisch Abbildungen eines Messobjekts für verschiedene Geometrieveränderungen in Form von Rotationen.

In den Figuren werden durchgängig dieselben Bezugszeichen für dieselben oder einander entsprechenden Elemente der Erfindung verwendet.

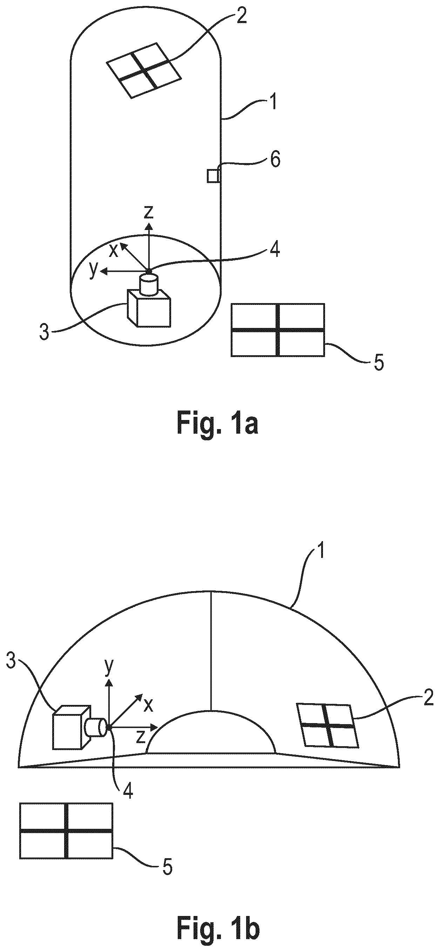

**Fig. 1a** zeigt schematisch eine Ausführungsform einer Messanordnung am Beispiel eines Turms, welcher hier das Objekt 1 darstellt. Eine solche Anordnung kann bei beliebigen Bauwerken Anwendung finden, welche sich in die Höhe erstrecken, wie Masten von Windkraftanlagen oder dergleichen. Eine Bilderfassungseinrichtung 3 ist in diesem Beispiel in einem unteren Bereich des Objekts 1 angeordnet, beispielsweise am Boden des Turms. Bei der Bilderfassungseinrichtung 3 kann es sich um eine Digitalkamera handeln, welche eine Mehrzahl von Abbildungen 5 eines Messobjekts 2 aufnehmen kann, insbesondere eine Bildsequenz mit einer bestimmten Frequenz und Auflösung. Das Messobjekt 2 ist hier in einem oberen Bereich des Turms, beispielsweise an der Decke angeordnet, sodass es von einem Aufnahmepunkt 4 aus in einer Blickrichtung z sichtbar ist. Denkbar ist auch eine andere Anordnung, bei der sich die Bilderfassungseinrichtung 3 und das Messobjekt beispielsweise an gegenüberliegenden Wänden des Objekts 1 befinden. Durch die gezeigte Anordnung kann jedoch die Höhe des Turms ausgenutzt werden. Durch den großen Abstand zwischen der Bilderfassungseinrichtung (bzw. dem Aufnahmepunkt 4) und dem Messobjekt 2 in der Blickrichtung z, fallen Abweichungen in der Abbildung 5 bei gleichen Geometrieveränderungen stärker aus als bei kleineren Abständen. Auch ist bei dieser Anordnung vorteilhaft, dass der Aufnahmepunkt 4 im Wesentlich fest ist, während sich das Messobjekt 2 mit dem Objekt 1 mitbewegt.

Das Messobjekt 2 weist ein Kreuzmuster auf, welches sich quer zur Blickrichtung z in x- und y-Richtung erstreckt. Eine Abbildung 5 des Messobjekts ist in Fig. 1a ebenfalls angedeutet. Hierbei kann es sich um eine Ausgangslage oder Ruhelage handeln, welche als Referenz für die weitere Überwachung des Objekts 1 dienen kann. Zusätzlich ist in diesem Ausführungsbeispiel an dem Objekt 1, beispielsweise an einer Wand des Turms, eine Sensoreinrichtung 6 angeordnet, welche weitere mechanische Einflüsse, wie Vibrationen oder dergleichen messen kann, welche auf das Objekt 1 einwirken.

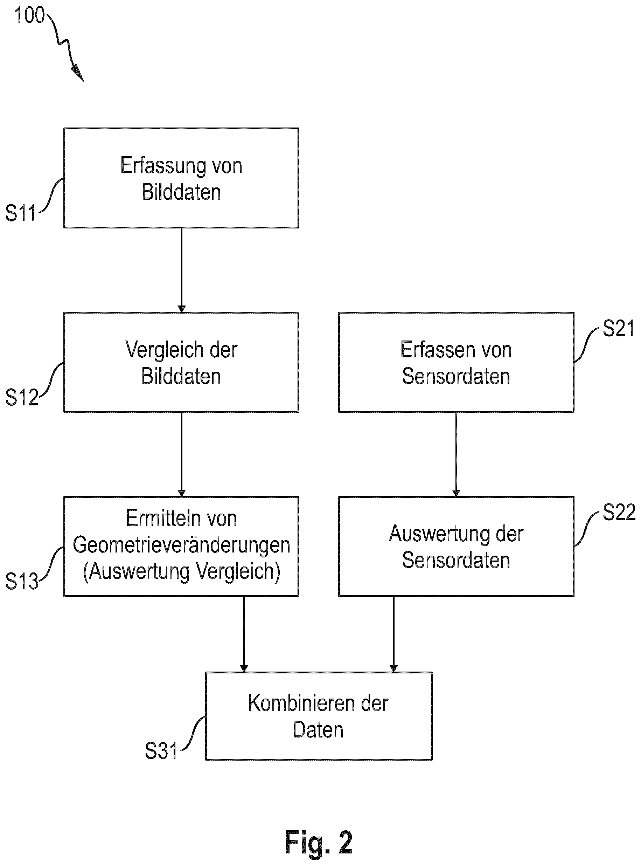

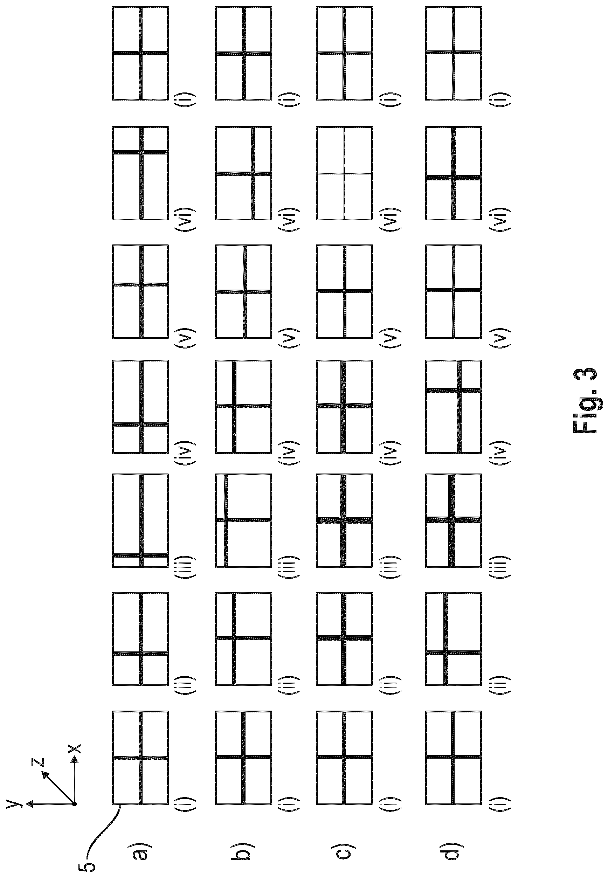

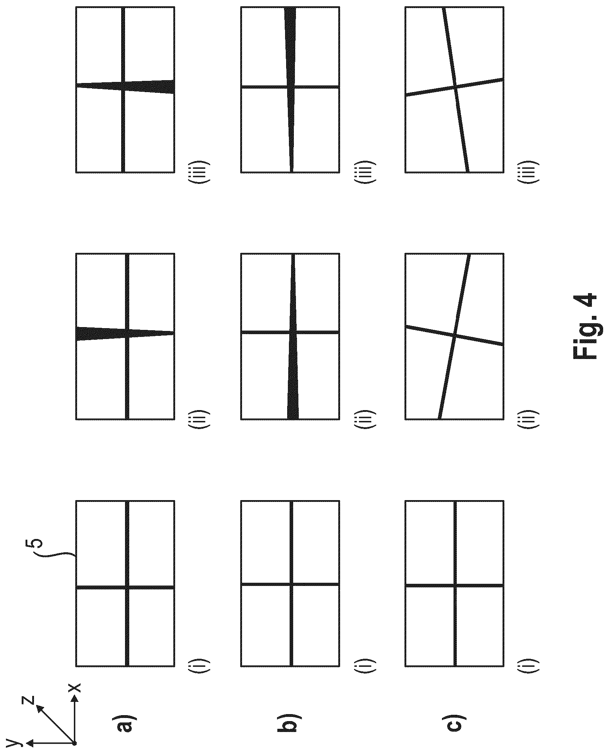

Eine weitere Ausführungsform einer Messanordnung ist in **Fig. 1b** dargestellt. Bei dem Objekt 1 handelt es sich hier um einen Tunnel, an dessen gegenüberliegenden Wänden die Bilderfassungseinrichtung 3 und das Messobjekt 2 angeordnet sind. Es gilt im Wesentlich das oben mit Bezug auf Fig. 1a Gesagte. Denkbar ist in diesem Ausführungsbeispiel auch eine andere Anordnung von Bilderfassungseinrichtung 3 und Messobjekt 2, beispielsweise an zwei entfernten Punkten entlang des Tunnels. Die Anordnung wie in Fig. 1b dargestellt ist jedoch vorteilhaft für die Überwachung der Tunnelwände beispielsweise unter dem Einfluss eines darüberliegenden Bergmassivs. Eine Verformung kann bei einem Tunnel, welcher durch einen Berg hindurch verläuft, beispielsweise bei der Bildung von Gneis auftreten. Das Gefüge von Gneisen bildet sich im festen Zustand, wobei vorhandene Minerale während der Metamorphose verformt werden können. Dadurch kann Druck von außen auf die Tunnelwände ausgeübt werden. Bezugnehmend auf **Fig. 2** wird nun beispielhaft ein Verfahren zum Ermitteln einer Geometrieveränderung eines Objekts 1 erläutert. Die Bilderfassungseinrichtung 3 nimmt eine Reihe von Abbildungen 5 des Messobjekts 2 auf (S11). Eine Bildsequenz kann mit einer bestimmten Bildrate, wie 60 fps, aufgenommen werden. Beispielhafte Bildsequenzen werden mit Bezug auf Fig. 3 und Fig. 4 erläutert. Abbildungen 5 des Messobjekts 2 zu unterschiedlichen Zeitpunkten werden miteinander verglichen (S12). Dies kann einfach mittels digitaler Bildauswertung erfolgen. Es erfolgt eine Auswertung (S13) des Vergleichs, um daraus Geometrieveränderungen des Objekts 1 zu ermitteln. Die Auswertung kann auch eine Transformation in einen Frequenzraum, z. B. mittels Fourier- oder Laplace-Transformation umfassen. Mit diesem Verfahren können auf einfache Weise sehr langwellige Schwingungen bis 0,1 Hz oder 1 Hz oder auch nicht periodische Verformungen des Objekts ermittelt werden.

Fig. 2 zeigt auch eine weitere Möglichkeit, das Objekt 1 auf Schwingungen oder dergleichen zu überwachen. Mittels zumindest einer Sensoreinrichtung 6, beispielsweise eines Vibrationssensors, wie eines Piezosensors, können weitere mechanische Einflüsse auf das Objekt 1 gemessen werden (S21). Diese Messdaten (Sensordaten) werden ausgewertet (S22), um Rückschlüsse auf Schwingungen, Vibrationen oder dergleichen zu erhalten. Dies können beispielsweise höherfrequente Vibration im Bereich von 1 Hz bis 15 kHz sein.

In einem weiteren Schritt S31 können die Daten zu den mit Hilfe der Bildauswertung erhaltenen Geometrieveränderungen des Objekts (S11, S12, S13) mit den Messdaten der Sensoreinrichtung (S21, S22) kombiniert werden. Dadurch können Einwirkungen auf das Objekt 1 in einem breiten Frequenzspektrum von unter 1 Hz bis hin zu 15 kHz, einschließlich nicht periodischer oder quasi statischer Verformungen umfassend überwacht werden.

**Fig. 3** zeigt beispielhaft und schematisch verschiedene Folgen von Abbildungen 5 des Messobjekts 2 bei Schwingungen des Objekts 1 und damit des Messobjekts 2 in verschiedenen Richtungen. Fig. 3a), b) und c) zeigen jeweils Zyklen von sieben Abbildungen, welche einem Schwingungszyklus entsprechen, wobei am Anfang und Ende die Abbildung (i) jeweils eine Ruhelage darstellt. Bei einer hohen Bildrate, wie 60 fps oder mehr, kann eine entsprechend hohe zeitliche Auflösung und damit eine hohe Genauigkeit erreicht werden.

Fig. 3a) veranschaulicht Abbildungen 5, wie sie bei Schwingungen des Objekts in x-Richtung auftreten. Während Abbildung (i) die Ruhelage darstellt, ist in den Abbildungen (ii)-(vi) jeweils eine Verschiebung der vertikalen Linie (d.h. der in y-Richtung verlaufenden Linie) des Kreuzmusters in x-Richtung zu beobachten. Anhand der Abweichung der vertikalen Linie in x-Richtung kann durch Vergleich mit der jeweils vorangehenden Abbildung oder auch jeweils mit der Abbildung (i) eine Verschiebung des Messobjekts 2 in x-Richtung und damit eine entsprechende Auslenkung des Objekts 1 in x-Richtung ermittelt werden.

Analog ist in Fig. 3b) in den Abbildungen (ii)-(vi) jeweils eine Verschiebung der horizontalen Linie (d.h. der in x-Richtung verlaufenden Linie) des Kreuzmusters in y-Richtung zu beobachten, welche durch eine Schwingung des Objekts 1 in y-Richtung verursacht wird. In Fig. 3c) ist in den Abbildungen (ii)-(vi) eine Veränderung der Linienstärke des Kreuzmusters zu erkennen. Diese wird durch eine Schwingung des Objekts 1 in z-Richtung verursacht. Da dies der Blickrichtung entspricht, ist dies gleichbedeutend mit einer Änderung des Abstands zwischen dem Aufnahmepunkt 4 und dem Messobjekt 2. Fig. 3d) veranschaulicht eine Kombination der Schwingungen in allen drei Richtungen.

**Fig. 4** zeigt beispielhaft und schematisch verschiedene Folgen von Abbildungen 5 des Messobjekts 2 bei Rotationen in verschiedenen Richtungen. Wie in Fig. 3 zeigt die Abbildung (i) jeweils die Ruhelage. Fig. 4a) zeigt Abbildungen 5, wie sie bei einer Rotation des Messobjekts 2 um die x-Achse auftreten. Es ist eine Verzerrung der vertikalen Linie des Kreuzmusters erkennbar, aus welcher durch einen Vergleich mit einer entsprechenden vorangehenden Abbildung oder jeweils der Abbildung (i) auf eine entsprechende Rotation des Objekts 1 geschlossen werden kann.

Bei Rotationen um die y-Achse erscheint entsprechend die horizontale Linie des Kreuzmusters verzerrt (Fig. 4b). Bei Rotationen um die z-Achse, d.h. Rotationen um die Achse der Blickrichtung, erscheint dagegen das gesamte Muster entsprechend rotiert. Auf diese Weise können mit dem Verfahren auch Rotationen bzw. Torsionen des Objekts 1 ermittelt werden. Entsprechend können durch eine Mischung auch Kombinationen von Rotationen um alle drei Achsen ermittelt werden.

Zur Auswertung einer Gesamtveränderung der Geometrie können die in Fig. 3a), 3b), 3c), 4a), 4b) und 4c) gezeigten isolierten Geometrieveränderungen in allen sechs Freiheitgraden bestimmt werden. Bei der Bildanalyse können entsprechende einzelne Auswertungen erfolgen, die dann kombiniert werden. Eine Amplitude kann bestimmt werden, indem ein Ausmaß des jeweiligen Unterschieds ermittelt wird, den der oben genannte Bildvergleich liefert, d.h. Ausmaß der Linienverschiebung, Ausmaß der Linienverzerrung (Änderung der Linienstärke) und Ausmaß einer Drehung. Da die zeitliche Auflösung der Bildsequenzen bekannt ist, können die einzelnen Geometrieveränderungen oder die gesamte Geometrieveränderung gegen die Zeit aufgetragen werden, sodass auch eine Frequenz der jeweiligen Geometrieveränderung ermittelt werden kann. Durch Transformation in einen Frequenzraum kann dann ein Frequenzspektrum ermittelt werden.

Das erfindungsgemäße Verfahren kann in seinen verschiedenen Varianten für unterschiedlichste Applikationen genutzt werden. Zu solchen Applikationen gehören insbesondere die Separierung von Abbildern verschiedener Körperteile einer Person, von verschiedenen Personen oder von einer oder mehreren Personen einerseits und einem oder mehreren anderen Objekten andererseits, jeweils voneinander oder gegenüber einem Hintergrund. Insbesondere kann das Verfahren genutzt werden, ein oder mehrere Körperteile einer Person in einem sensorisch erfassten Bild zu separieren, um sodann in Abhängigkeit vom Ergebnis einer solchen Separierung bzw. Segmentierung und einer darauf aufsetzenden Identifikation der Körperteile als Objekte eine Gestenerkennung im Hinblick auf etwaigen von der Person ausgeführten Gesten durchzuführen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Verfahren zum Ermitteln einer Geometrieveränderung eines Objekts
- 1: Objekt
- 2: Messobjekt
- 3: Bilderfassungseinrichtung
- 4: Aufnahmepunkt
- 5: Abbildung des Messobjekts
- 6: Sensoreinrichtung

## Patentansprüche

1. Verfahren (100) zum Ermitteln einer Geometrieveränderung eines Objekts (1), umfassend:
- Erfassen von ersten Bilddaten einer ersten Abbildung (5) eines Messobjekts (2), welches an dem Objekt (1) angebracht ist, wobei die erste Abbildung (5) das Messobjekt (2) von einem definierten Aufnahmepunkt (4) aus in einer definierten Blickrichtung (z) zu einem ersten Zeitpunkt abbildet;
- Erfassen von zweiten Bilddaten zumindest einer zweiten Abbildung des Messobjekts (2), wobei die zweite Abbildung das Messobjekt (2) von dem definierten Aufnahmepunkt (4) aus in der definierten Blickrichtung (z) zu einem späteren zweiten Zeitpunkt abbildet;
- Vergleichen der zweiten Bilddaten mit den ersten Bilddaten;
- Ermitteln einer Geometrieveränderung des Objekts (1) in Abhängigkeit eines Ergebnisses des Vergleichs.

2. Verfahren nach Anspruch 1, wobei die erste Abbildung ein Referenzbild ist, welches einer Referenzgeometrie des Objekts (1) zugeordnet ist, wobei durch den Vergleich der zweiten Bilddaten mit den ersten Bilddaten eine Geometrieveränderung des Objekts (1) relativ zur Referenzgeometrie ermittelt wird.

3. Verfahren nach Anspruch 1 oder 2, wobei eine ermittelte Geometrieveränderung als kritisch eingestuft wird, wenn das Ergebnis des Vergleichs einen Unterschied zwischen den ersten Bilddaten und den zweiten Bilddaten ergibt, der einen vorgegebenen Schwellenwert überschreitet.

4. Verfahren nach einem der vorausgehenden Ansprüche, wobei die erste Abbildung und die zweite Abbildung Teil einer Mehrzahl von Abbildungen sind, welche das Messobjekt von dem definierten Aufnahmepunkt aus in der definierten Blickrichtung zu aufeinander folgenden Zeitpunkten abbilden.

5. Verfahren nach einem der vorausgehenden Ansprüche, wobei das Ermitteln einer Geometrieveränderung ein Ermitteln einer Schwingung des Objekts (1) umfasst.

6. Verfahren nach einem der vorausgehenden Ansprüche, wobei das Ermitteln einer Geometrieveränderung ein Ermitteln einer nicht schwingenden Verformung des Objekts (1) umfasst.

7. Verfahren nach einem der vorausgehenden Ansprüche, wobei das Ermitteln einer Geometrieveränderung ein Ermitteln einer Geometrieveränderung bezüglich zumindest eines der folgenden Freiheitsgrade umfasst: Verschiebung in x-Richtung, Verschiebung in y-Richtung, Verschiebung in z-Richtung, Rotation um x-Achse, Rotation um y-Achse und Rotation um z-Achse.

8. Verfahren nach einem der vorausgehenden Ansprüche, wobei das Messobjekt (5) ein zweidimensionales Muster aufweist.

9. Verfahren nach einem der vorausgehenden Ansprüche, wobei das Objekt (1) ein Bauwerk oder ein natürliches Landschaftsobjekt ist.

10. Verfahren nach einem der vorausgehenden Ansprüche, wobei eine über eine Zeitdauer ermittelte Geometrieveränderung mittels einer Transformationsfunktion in einen Frequenzraum transformiert wird, um daraus zumindest eine Frequenz zu ermitteln, mit welcher die ermittelte Geometrieveränderung auftritt.

11. Verfahren nach einem der vorausgehenden Ansprüche, wobei eine ermittelte Geometrieveränderung mit einem Modell zumindest einer vordefinierten Geometrieveränderung verglichen wird und bei einer Übereinstimmung die ermittelte Geometrieveränderung als eine Geometrieveränderung eingestuft wird, welche der passenden vordefinierten Geometrieveränderung entspricht.

12. Verfahren nach einem der vorausgehenden Ansprüche, des Weiteren umfassend:
- Erfassen von Messdaten bezüglich eines mechanischen Einflusses auf das Objekt (1) mittels zumindest einer Sensoreinrichtung (6); und
- Kombinieren der Messdaten mit der ermittelten Geometrieveränderung.

13. System zur Datenverarbeitung, aufweisend zumindest einen Prozessor, der so konfiguriert ist, dass er das Verfahren nach einem der vorausgehenden Ansprüche ausführt, wobei die ersten Bilddaten und zweiten Bilddaten als Eingabedaten in dem System erfasst werden.

14. Messanordnung, umfassend ein System zur Datenverarbeitung nach Anspruch 12 sowie eine Bilderfassungseinrichtung (3) und ein Messobjekt (2), wobei das Messobjekt (2) derart an dem Objekt (1) anbringbar ist, dass es von einem definierten Aufnahmepunkt (4) aus in einer definierten Blickrichtung (z) sichtbar ist, und die Bilderfassungseinrichtung (3) eingerichtet ist, eine Mehrzahl von Abbildungen (5) von dem Messobjekt (2) von dem definierten Aufnahmepunkt (4) aus in der definierten Blickrichtung (z) aufzunehmen.

15. Computerprogramm mit Instruktionen, die bei ihrer Ausführung auf einem System nach Anspruch 12 dieses veranlassen, das Verfahren nach einem der Ansprüche 1 bis 11 auszuführen.
